Europäisches Patentamt

European Patent Office

Office européen des brevets

(19)

(11) Publication number: **0 260 441 B1**

# (12) EUROPEAN PATENT SPECIFICATION

(45) Date of publication of patent specification :
**23.10.91 Bulletin 91/43**

(51) Int. Cl.⁵ : **F16J 15/32**

(21) Application number : **87111718.0**

(22) Date of filing : **13.08.87**

(54) **Seal.**

(30) Priority : **15.09.86 SE 8603854**

(43) Date of publication of application :
**23.03.88 Bulletin 88/12**

(45) Publication of the grant of the patent :
**23.10.91 Bulletin 91/43**

(84) Designated Contracting States :
**DE FR GB IT**

(56) References cited :
**EP-A- 0 191 894**
**DE-A- 2 331 412**
**DE-A- 2 930 462**
**US-A- 4 522 411**
**US-A- 4 572 516**

(73) Proprietor : **SKF Nova AB**
**S-415 50 Göteborg (SE)**

(72) Inventor : **Asberg, Sture**
**Bergtungegatan 7**
**S-42158 V:A Frölunda (SE)**

EP 0 260 441 B1

## Description

The present invention refers to sealings of the type intended for sealing off bearing spaces, wall channels for shafts and the like, the seal being fitted to a shaft intended for rotation, and incorporating a sheet metal strutting projecting radially outwards whereby the sheet metal strutting is provided with one or more rubber sealing lips on the side facing the space intended to be sealed off, the sealing lips emanating from the centrally inner part of the metal strutting.

Seals are usually fitted to the non-mobile part and seals againsts the rotating shaft or some member fitted thereto, by means of one or more sealing lips which preferably consist of rubber. However, seals fitted to the rotating shaft are also known as for example from US-A-4 572 516 wherein a seal is disclosed having the abovementioned features. The intention with the seal described therein was to provide a low friction dynamic seal assembly.
This seal as well as other known seals have in common that the sealing lip shall be given a proper pressure against another part in the device and thus prevent dirt, water and the like from penetrating into the space intended to be sealed off. It is very important that the lip contacts with a suitable pressure. If this pressure becomes too high the friction will be too big and if it becomes too low, then the sealing function will be poor.

The space outside the seal sometimes can be very fouled, which puts big demands on the seal. In order to ascertain a satisfactory sealing effect it is sometimes provided several seals, often of different types, such as lip seals combined with labyrinth seals. One purpose thereof is that such a low amount of dirt as possible shall come into contact with the final inner seal. Such an arrangement with several seals can be complex and thereby also expensive as well to manufacture as in assembly.

In a further document, EP-A-191 894 a cassette seal is disclosed in which the strutting has been provided with seal lips of rubber and protrusions at each side. It seems that the protrusion is intended to press out possible liquid and contaminations through the surronding medium and it will be bent backwards in the direction of the rotation. The axial force pressing the seal lips will be stronger the faster the shaft rotates which means an increased axial pressure of the seal which is quite the contrary to what is desirable i.e. lower axial pressure for faster rotation. The seal of the present application has no seal lips at the periphery, but has been provided with vanes at the outer side. These vanes will also bring about an axial force on the plate during rotation, but as no sealing lip is influenced of this increased axial force (which is completely taken up by the plate) this axial force will have no detrimental influence.

In DE-A-2 331 412 a common seal having an extra van is shown. However this extra van is only provided in order to blow oil mist onto the seal.

In order to, in a simple manner, solve the problem of sealing off against heavily fouled surroundings, without the use of combinations, the invention proposes a seal as described above, being equipped with mainly radially extending vanes, the radial extension of which mainly coincide with the radial extension of the sheet metal strutting, on the side facing away from the space intended to be sealed off.

According to the invention the vanes in the seal are preferably made from rubber and bonded to a sheet metal strutting in the seal. It is also eligible that the sheet metal strutting in the seal is bent axially in the vicinity of the shaft and that the vanes emanate from this bend.

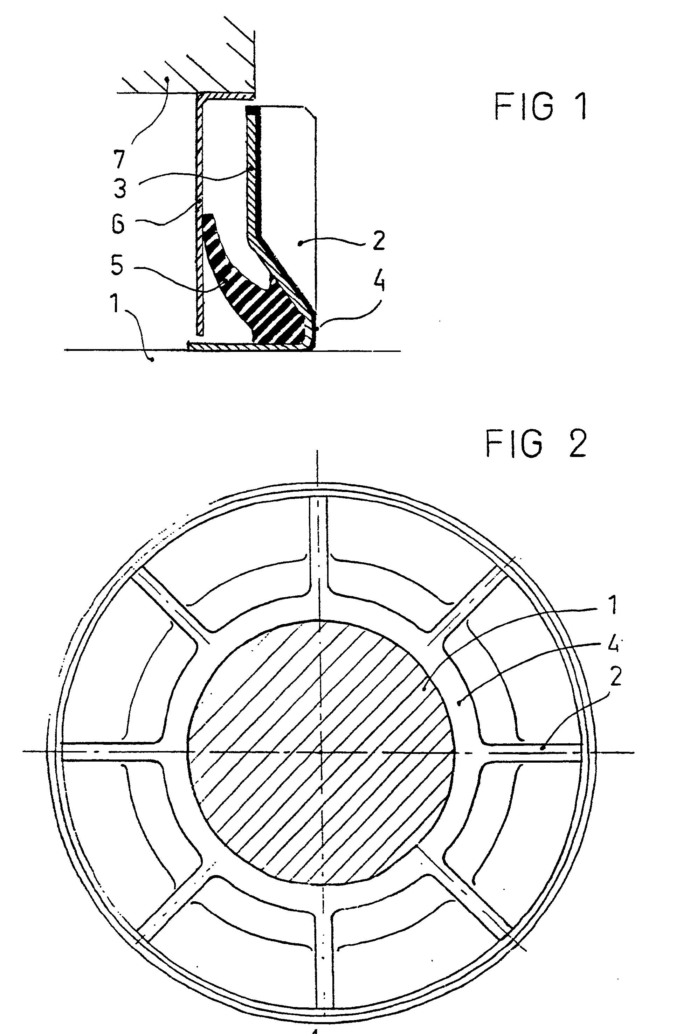

The invention will hereinafter be further described with reference to the drawings, where figure 1 shows a section through a seal according to the invention fitted to a shaft and figure 2 shows the same seal when seen from the side and from the outside.
Figure 1 shows a shaft 1, on which is fitted a seal according to the invention incorporating radial vanes 2, which are bonded to a sheet metal strutting. Such as shown this sheet metal strutting 3 is provided with a bend 4 near the shaft 1. The vanes 2 emanate from this bend 4 which also will give strength to the vanes 2. The bend 4 also acts as mounting surface for the seal. On the inner side of the sheet metal strutting 3 there is a sealing lip 5, which in the present case contacts against a sheet metal member 6 and seals off against this. The sheet metal member 6 is fittedly mounted in a wall 7 or the like and is consequently non-rotating.

In figure 2 is shown the outer side of the seal, and this figure clearly shows the vanes 2. The number of such vanes is variable. A proper number is 8 vanes.

The purpose of the vanes 2 according to the invention is to improve the fling-off effect of the seal so that particles, liquid droplets or other dirt on the outside of the seal shall be thrown out and thus not come into the vicinity of the sealing lip 5. Beside the dirt thereby being removed it is also obtained an increased cooling effect in that turbulence will be created in the surrounding media.

The seal according to the invention presents a simplified improvement of earlier known seals, and the additional cost for the improvement shown in the embodiment merely consists in the cost of the material in the vanes 2.

## Claims

1. A seal for bearing spaces, wall channels for shafts and the like, the seal being fitted to a shaft (1) intended for rotation, and incorporating a sheet metal strutting (3) projecting radially outwards whereby the sheet metal strutting (3) is provided with one or more rubber sealing lips (5) on the side facing the space intended to be sealed off, the sealing lips emanating from the centrally inner part of the metal strutting (3), characterized therein that it is equipped with mainly radially extending vanes (2), the radial extension of which mainly coincide with the radial extension of the sheet metal strutting (3), on the side facing away from the space intended to be sealed off.

2. A seal as claimed in claim 1, **characterized therein,** that the vanes (2) are made from rubber and are bonded to the sheet metal strutting (3).

3. A seal as claimed in claims 1 or 2, **characterized therein,** that the sheet metal strutting (3) is bent axially in the vicinity of the shaft (1) and that the vanes (2) emanate from this bend (4).

## Patentansprüche

1. Eine Dichtung für Lagerräume, Durchgangswände und dgl., welche auf eine rotierbare Welle (1) gesetzt wird und in der eine radial nach außen sich erstreckende Metallblechstrebe (3) eingelassen ist, wobei die Metallblechstrebe (3) auf ihrer zum abzudichtenden Raum hinweisenden Seite mit einer oder mehr Gummidichtlippen (5) versehen ist und die Gummidichtlippen ausgehend von einem zentrisch inneren Abschnitt der Metallstrebe (3) sich erstrecken, dadurch gekennzeichnet, daß diese auf ihrer vom abzudichtenden Raum wegweisenden Seite mit im wesentlichen radial sich erstreckenden Rippen (2), deren radiale Erstreckung im wesentlichen mit der radialen Erstreckung der Metallblechstrebe (3) übereinstimmt, versehen ist.

2. Eine Dichtung nach Anspruch 1, dadurch gekennzeichnet, daß die Rippen (2) aus Gummi gefertigt und an der Metallblechstrebe (3) befestigt sind.

3. Eine Dichtung nach Anspruch 1 oder 2, dadurch gekennzeichnet, daß die Metallblechstrebe (3) in der Nähe der Welle (1) in axialer Richtung gebogen ist und daß die Rippen (2) ausgehend von dieser Biegestelle (4) sich erstrecken.

## Revendications

1. Joint pour espaces intérieurs de paliers, passages d'arbres et organes similaires, le joint étant monté sur un arbre (1) mobile en rotation et comprenant une armature en tôle (3) s'étendant radialement vers l'extérieur, l'armature en tôle (3) étant munie d'une ou plusieurs lèvres d'étanchéité (5) en caoutchouc du côté regardant l'espace à protéger, les lèvres étant issues de la partie intérieure centrale de l'armature métallique (3), caractérisé en ce qu'il est équipé d'ailettes (2) s'étendant principalement radialement, l'extension radiale de ces ailettes coïncidant principalement avec celle de l'armature en tôle (3) du côté qui s'écarte de l'espace à protéger.

2. Joint selon revendication (1), caractérisé en ce que les ailettes (2) sont en caoutchouc et adhèrent à l'armature en tôle (3).

3. Joint selon revendications 1 ou 2, caractérisé en ce que l'armature en tôle (3) est incurvée axialement au voisinage de l'arbre (1) et les ailettes (3) sont issues de cette partie incurvée (4).

FIG 1

7
3
6
5
1

2

4

FIG 2

1
4
2